# EUROPEAN PATENT APPLICATION

(11) **EP 3 683 436 A1**
(43) Date of publication of application: **22.07.2020**
(21) Application number: 19305069.7
(22) Date of filing: 18.01.2019
(51) Int. Cl.: F03B 3/18, F03B 15/00

(54) **METHOD FOR STARTING A HYDROELECTRIC TURBINE**

(71) Applicant: GE Renewable Technologies, 38100 Grenoble (FR)
(72) Inventor: GUILLAUME, Renaud, 38100 Grenoble (FR); ALLOIN, Quentin, 38100 Grenoble (FR)
(74) Representative: Brevalex

(57) **Abstract**

The invention concerns a method for starting a hydroelectric turbine (10) provided with a runner (6) mechanically coupled to a shaft line (8), a distributor (4) comprising leak tight guide vanes to control a flow of water to said runner, a spiral case (12) for supplying water to said runner, said spiral case comprising a duct connected to a main inlet valve (14), the method comprising:
a) a step of balancing pressures on both sides of said main inlet valve (14), and of at least partially opening said main inlet valve (14), while the leak-tight guide vanes of the distributor (4) are closed, water pressurized at an upstream level being present in said spiral case and at said distributor (4);
b) then a step of opening the leak-tight guide vanes of the distributor (4).

## Description

### TECHNICAL FIELD

The invention relates to a method for starting a hydroelectric turbine. In particular, the invention relates to a method for starting a hydroelectric turbine which comprises a generator whose rotor is driven in rotation by a turbine. The present invention is further intended to propose a method for starting a hydroelectric turbine in a faster way than prior art methods.

### PRIOR ART

In order to insure a grid stability and/or to prevent a network blackout, a grid balancing between the electrical power production and the electrical power consumption must be achieved.

Hydroelectric power plants have an electrical power reserve, via water reserves contained in a reservoir that can be provided upon demand by starting a hydroelectric turbine in order to compensate any variation of the consumption and/or the production of the electrical power.

To this regard, the time response for providing such an electrical power reserve is thus a critical factor, on the basis of which the electricity producer can expect a more or less advantageous remuneration.

For a conventional reservoir hydroelectric power plant, upon receipt of the start order, different steps must be performed before providing power to the network:
a) open the main inlet valve of the penstock;
b) open the guide vanes (wicket gates) to pass the flow of water in the runner and bring the runner speed up to a rated speed;
c) at a certain speed threshold, launch an excitation current in the rotor windings in order to energize the generator;
d) adjust the guide vanes to stabilize the runner speed at a value close to a nominal speed (which corresponds to the frequency of the grid);
e) align the phases of the network with the phases of the generator;
f) close the circuit breaker to connect the stator windings to the electrical network;
g) open the wicket gates to increase the flow in the turbine and consequently the output power up to the target.

However, this method is not satisfactory.

Indeed, the minimum time response for starting a hydroelectric turbine is about 90 seconds, is not compatible with the maximum efficiency that could be expected in terms of revenues.

For example, steps a) and b) generally take 20 s to 60 s. The balancing of the pressure between upstream side and downstream side of the main inlet valve is indeed necessary before opening it. In addition, a water discharge passing through the main inlet valve at partial opening can create undesirable wear and tear. That is why the main inlet valve must be opened enough before opening the guide vanes in order to have no water discharge during the motion of the valve.

Therefore, to keep time response of the hydroelectric unit starting as low as possible, it has been proposed to maintain said unit synchronized to the grid at very low power.

However, this solution is also not satisfactory.

Indeed, when synchronized at very low or zero power, the hydroelectric unit consumes water reserves while operating at very low efficiency.

Besides, turbines and generators, which are generally not designed to operate at low power, then undergo abnormal wear.

It is possible to operate at higher power but such additional power, even if not needed, has to be managed by the grid operator and is sold at a very low price.

Alternatively, the hydroelectric unit can be kept synchronized to the grid in a dewatered mode.

However, the alternative is also not satisfactory.

Indeed, the dewatered mode requires specific investments for flushing the water from the hydroelectric turbine, which increase the cost of the installation.

Furthermore, in dewatered mode, the hydroelectric unit consumes electrical power form the grid.

It is therefore an object of the invention to propose a method for starting a hydroelectric unit in a faster way than known prior art method.

It is also an object of the invention to propose a method for starting the hydroelectric turbine that does not require any additional investments.

It is also an object of the invention to propose a method for starting a hydroelectric unit that does not consumes neither water reserves nor grid electrical power.

### SUMMARY OF THE INVENTION

The aforementioned objects are, at least partly, achieved by a method for starting a hydroelectric turbine provided with a runner mechanically coupled to a shaft line, a distributor comprising leak-tight guide vanes to control a flow of water to said runner, a supply spiral case for supplying water to said runner, said supply spiral case comprising a duct connected to a main inlet valve, the method comprising:
a) a step of balancing pressures on both sides of said main inlet valve, and of at least partial opening said main inlet valve, while the leak-tight guide vanes of the distributor are closed, water being present in said spiral case and at said distributor with a pressure of, for example, at least 2 bars or 5 bars or 10 bars or 30 bars, which can be the pressure due to an upper reservoir upstream of said turbine;
b) then a step of opening the leak tight guide vanes of the distributor.

Said step b) can be performed upon request of a start order from a power producer or from a network, water being immediately available for the runner at a pressure of, for example, at least 2 bars or 5 bars or 10 bars or 30 bars.

Said hydroelectric turbine can be connected to one, preferably two, reservoirs of water.

Said hydroelectric turbine can be connected to a grid, the duration between end of step b) and grid synchronization being less than 60s or less than 30 s.

Said step a) can comprise fully opening said main inlet valve.

Said main inlet valve for example comprises a spherical valve or a butterfly valve.

A method according to the invention can comprise a standstill mode before step b), for example between steps a) and b), wherein said runner is mechanically coupled to the rotor of a generator via said shaft line.

Said standstill mode can comprise at least one of:
- injecting pressurized oil in at least one bearing of said shaft line;
- cooling of at least one bearing of said shaft line;
- cooling of the generator;
- applying a brake device in order to maintain the shaft line rotation stopped;
- keeping at least one oil tank at a high pressure level, for example between 45 bars and 200 bars, in particular between 50 and 65 bars or between 110 and 170 bars, to enable the operation of the distributor.

In a method according to the invention, the speed of the runner can increase during step b) or from the beginning of step b).

The main inlet valve can be opened, or even fully opened, before receiving an order of starting the hydroelectric turbine, and/or the pressures on or between both sides of the main inlet valve are balanced before receiving an order of starting the hydroelectric turbine.

The invention also concerns a hydroelectric turbine provided with a runner mechanically coupled to a shaft line, comprising a distributor comprising leak-tight guide vanes to control a flow of water to said runner, a spiral case for supplying water to said runner, said spiral case comprising a duct connected to a main inlet valve, said turbine further comprising a controller to start said hydroelectric turbine so as to implement a method according to the invention as disclosed above and in this application.

The invention also concerns a computer program comprising instructions for implementing a method according to the invention as disclosed above and in this application.

The invention applies in particular to all hydroelectric units, including fixed speed PSP, variable speed PSP, Francis, Kaplan and bulb turbine unit or a bulb hydro-turbine; preferably it applies to power plants comprising reservoirs.

The invention allows a reduction of the time response defined as the time between receiving the order to provide a given level of power to the grid and the moment when it is available on the grid.

The invention also concerns a computer program for implementing the method of starting a hydroelectric unit according to the present invention.

### BRIEF DESCRIPTION OF THE DRAWINGS

Other characteristics and advantages shall appear in the following description of embodiments of the method for starting a hydroelectric turbine according to the invention, given by way of non-limiting examples, in reference to the annexed drawings wherein:
- figure 1 is a schematic representation of a hydroelectric unit according to a first embodiment of the invention involving a controller which controls the main inlet valve and the distributor;
- figures 2A, 2B and 2C are timing diagrams of startup sequences of a hydroelectric turbine according to the prior art (figure 2A) and according to the invention (figures 2B and 2C);
- figures 3A, 3B and 3C are timing diagrams of startup sequences of a hydroelectric turbine according to the prior art (figure 3A) and according to the invention (figures 3B and 3C), including a stand-still mode;
- figures 4A and 4B are schematic representations of a leak-tight guide vane.

### DETAILLED DESCRIPTION OF SPECIFIC EMBODIMENTS

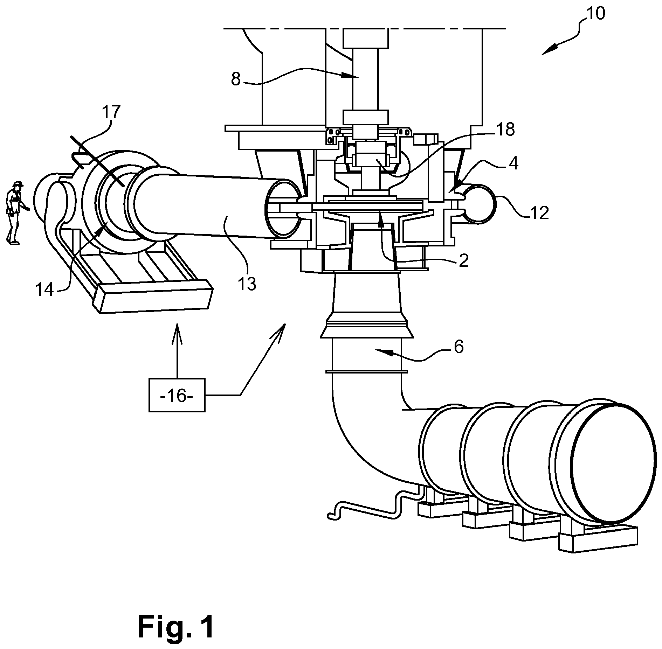

An example of a hydroelectric turbine 10 to which the invention can be applied is illustrated in figure 1. Said turbine can be implemented in a hydroelectric power plant with one reservoir, preferably two water reservoirs (one reservoir upstream and one reservoir downstream), using a water height of, for example, at least 20 m or 100 m up to 1000 m.

A water reservoir can be a reservoir large enough so that there is no necessity for the hydroelectric power plant operator to operate the plant for environmental reason, for example the regulation of the water level or the flow of a river connected to the plant or the reservoir.

A water reservoir can be located at the upstream side of the plant, or at the downstream side, or a water reservoir is located at the upstream side of the plant and a water reservoir is located at its downstream side.

Thanks to the large amount of available water in the reservoir, the hydroelectric power plant thus equipped can be used by the electricity network operators as bulk energy storage means in order to ensure the balancing of the grid. The balancing of the grid needs fast time responses from producing units.

Turbine 10 comprises a runner 2, a distributor 4, a draft tube 6 and a shaft line 8. A spiral case 12 guides a flow of water from a duct 13 connected to a main inlet valve 14 to the distributor, downstream of a penstock.

Via the shaft line 8 the runner 2 is mechanically coupled to the rotor of a generator; when rotating, the runner drives the rotor into rotation inside the stator windings. The stator windings are themselves intended to be connected to a grid via a circuit breaker and a transformer.

The distributor 4 comprises guide vanes and is water-tight in closed position.

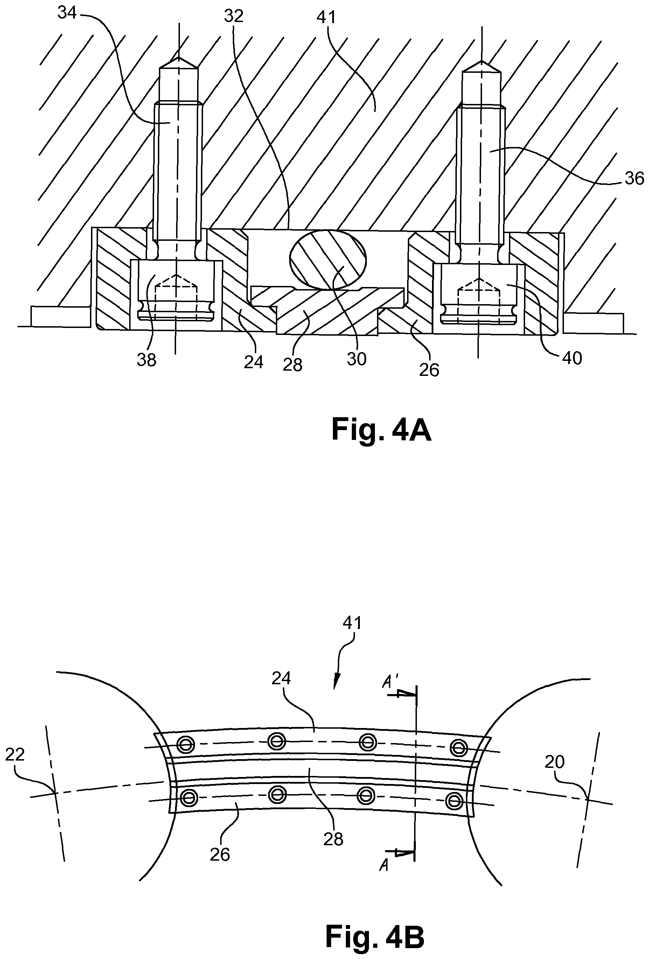

An example of a water-tight distributor is shown on figures 4A and 4B which are explained below.

The main inlet valve 14 may be for example a spherical valve or a butterfly valve. Both need a certain time to be opened, for example 30s, which can comprise 5s to 10s to equilibrate the pressure between the upstream side and the downstream side of the valve, for example by opening one or more bypass pipes 17. After this pressure balancing, the valve 14 can be opened.

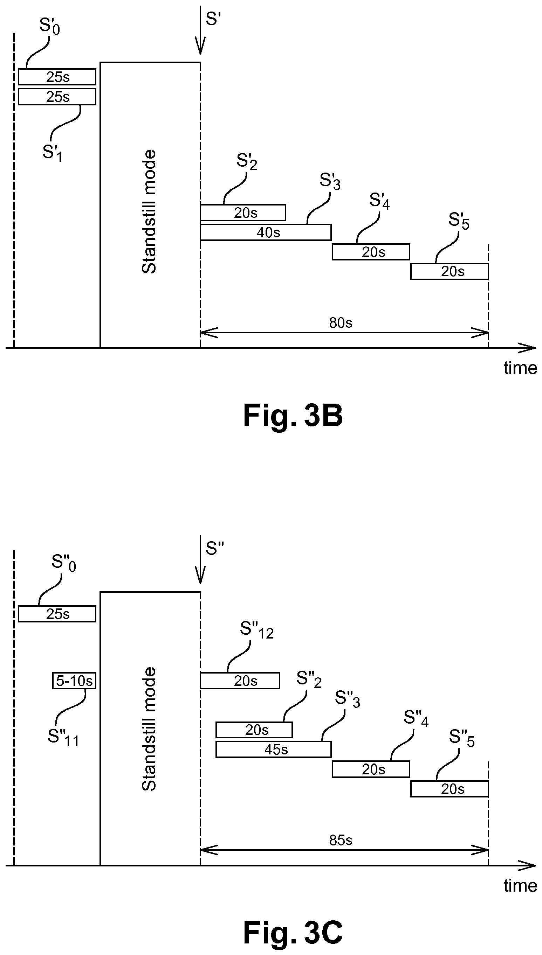

According to the invention the guide vanes of the distributor 4 remain closed during pressure balancing of the main inlet valve and during at least part of the sequence of opening the main inlet valve 14; the guide vanes of distributor 4 can also remain closed after this sequence, for example during a so-called standstill mode (see the examples of figures 3B and 3C below). Since the distributor is water-tight, no water leaks through the distributor when its guide vanes are closed, in particular during a standstill mode.

The turbine works with ancillary equipment comprising one or more oil tank(s), and/or one or more pump(s) to inject oil and/or cold water and/or a cooling system and/or one or more axial and radial bearings 18 (see figure 1) and/or one or more brake device, etc.

During a standstill mode, one or more devices of said ancillary equipment can be switched on. For example, pressurized oil can be injected in the pads of the axial and radial bearings 18 so that the shaft line 8 and the rotor of the generator are ready to be rotated by the turbine. Cold water can be put in motion in the cooling system of the bearings by pumps so that the injected oil is kept at an acceptable temperature. The oil tanks can also be kept at a high pressure level to enable the operation of the distributor. Cold water can be put in motion in the cooling system of the generator. The oil injection in the bearing reduces the friction and can allow a low rotation of the shaft line. A brake device can then be in operation to keep the shaft line stopped if necessary. The operation of the distributor can be performed by supplying the pressurized oil to servomotors. In standstill mode, the turbine is ready to start.

The invention modifies the standstill mode thanks to the use of a tight distributor, so that the start-up sequence can be simplified and the time response of the turbine reduced (down to 60 s or less): the main inlet valve is already opened (or pressure is already balanced between both sides of said main inlet valve) during this standstill mode, so that the water pressure in spiral case 12 and on the guide vanes of the distributor is that of the water height of the upstream reservoir, for example at least 2 bars or 5 bars or 10 bars or 30 bars, for example between 10 bars and 100 bars or between 30 bars and 70 bars, the sealing function being ensured by the tight distributor.

Furthermore, usual distributors are not water-tight which results in water loss through the closed distributor of up to several hundreds of liters per second.

According to the invention a water-tight distributor 4 is implemented instead of the main inlet valve to avoid the water leakage when the unit is ready to start or in standstill mode.

Furthermore, in known methods for starting a hydroelectric turbine, the main inlet valve 14 is first opened and guide vanes of the distributor 4 are then opened in a second time when the opening of the main inlet valve has reached a threshold (for example 50%). During this phase the valve 14 is only partially opened, which causes head losses in the hydraulic circuit, and turbulence and cavitation around the valve which are responsible on an undesirable wear of the equipment.

Unlike said known methods, the guide vanes of the distributor 4 according to the present invention are opened only after full opening of the main inlet valve 14 (or after pressure is balanced between both sides of said main inlet valve followed by its partial opening) which therefore avoids the above mentioned wear and does not cause such head losses in the hydraulic circuit.

Upon receiving an order to start the hydroelectric turbine (for example at the end of a standstill mode) from a power producer or from a network, the guide vanes of the distributor 4 are opened. The time from the standstill mode (or from said order) to supply said network with electricity is for example less than 60 s or less than 80 s. It is shorter than with the prior art because water is immediately available for the runner: upon receiving the order to start the unit, the guide vanes of the distributor are opened and the water flows into the runner, without additional time and/or head losses due to the opening phase (without any pressure balance) of the main inlet valve 14. The speed of the runner can increase rapidly, a few seconds after opening of the guide vanes of the distributor. The speed ramp-up or the speed increase can start during the opening of the guide vanes, or even with the beginning of the opening of the guide vanes, and is shorter than in the prior art because of the absence of head losses usually associated with a main inlet valve not fully opened or on both sides of which pressure is not yet balanced.

The device of figure 1, and in particular the opening and the closing of the main inlet valve 14 and of the guide vanes of the distributor 4, is controlled by a processor or a computer 16 configured or programed so as to implement a process according to the invention, in particular in order:
- to first open the main inlet valve 14;
- then to receive an order to start the hydroelectric turbine, for example at the end of a standstill mode, and, further to this order, to open the guide vanes of the distributor 4.

Alternatively, or in addition, said processor or computer 16 can be configured or programed so as to implement a process according to the invention, in particular in order:
- to first balance the pressures on both sides of said main inlet valve 14;
- then to receive an order to start the hydroelectric turbine, for example at the end of a standstill mode, and, further to this order, to open part of said main inlet valve 14 and then to open said guide vanes together with the opening of the rest of the main inlet valve 14.

For example said processor or a computer 16 implements a computer program comprising instructions for implementing a method according to the invention.

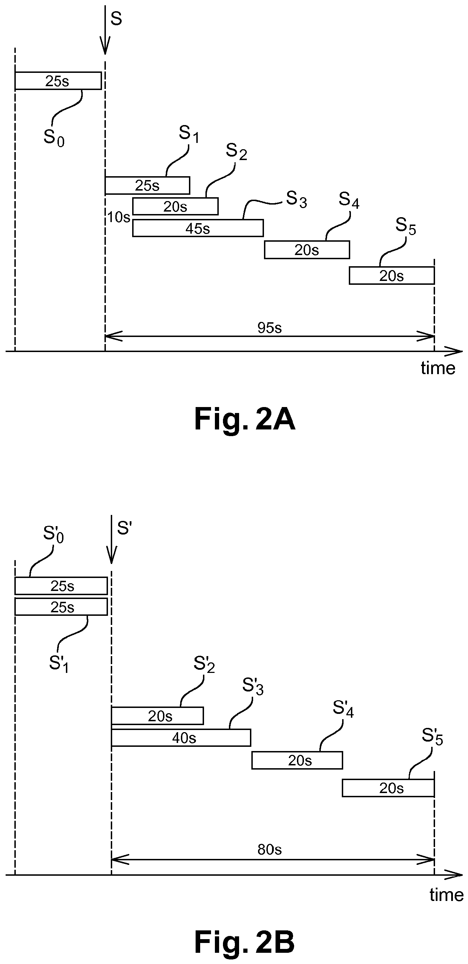

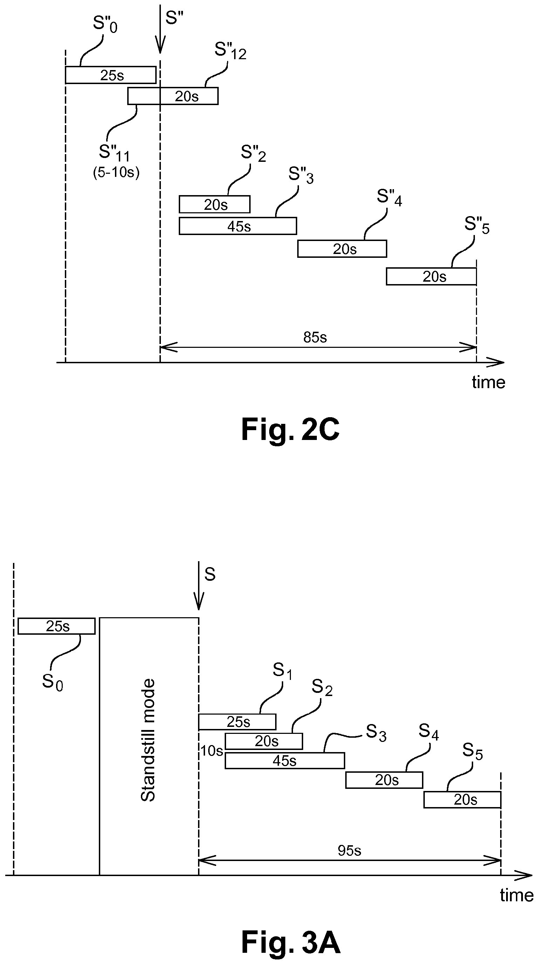

Examples of startup sequences according to the prior art, resp. according to the invention are illustrated on figure 2A, resp. figures 2B and 2C. Each sequence comprises several steps, an example for the duration of each step being indicated on each of figures 2A - 2C.

The prior art sequence of figure 2A comprises (after cooling (step S₀) has started), the receipt of a start order S and an opening of the main inlet valve 14 (step S₁); after partial opening of said main valve, the guide vanes of the distributor are opened (step S₂). The speed of the turbine (step S₃) starts approximately at the same time as the opening of the guide vanes and is followed by a synchronization step (S₄) and a load ramp-up phase (step S₅). In this example, both steps S₂ and S₃ start about 10 s after the beginning of step S₁ and the overall time of the whole process (between beginning of step S₁ and end of step S₅) is about 95 s.

The example of sequence according to the invention (figure 2B) comprises (after cooling has started, step S'₀) an opening of the main inlet valve 14 (step S'₁), simultaneously with the cooling phase. Upon receipt of the start order S', the guide vanes of the distributor are opened (step S'₂). The speed of the turbine (step S'₃) starts approximately at the same time as the opening of the guide vanes and is followed by a synchronization step (S'₄) and a load ramp-up phase (step S'₅). In this example, both steps S'₂ and S'₃ start immediately at the start order and the overall time of the whole process (between start order S' and end of step S'₅) is reduced to about 80 s. It has to be noted that, due to the absence of head losses usually associated with a partial opening of the main inlet valve 14, step S'₃ is shorter than in the prior art (here: 40 s instead of 45 s).

Step S'₀ can extend over order S'; for example, oil injection in the bearing pads and/or oil cooling can continue after said start order S'.

A variant of this example is illustrated on figure 2C where step S"₀ is identical to step S'₀ above and step S"₁ (opening of the main inlet valve) comprises two substeps S"₁₁ and S"₁₂: the pressures on both sides of the main inlet valve are first balanced (sub-step S"₁₁), for example by opening of the bypass 17 before receipt of a start order S"; the main inlet valve 14 can then be opened (sub-step S"₁₂) and, shortly (for example 5 s or, more generally, between 1 s and 10 s) after the beginning of said sub-step S"₁₂, step S"₂ (identical to step S'₂ of figure 2B) is started. The following steps S"₃, S"₄ and S"₅ are identical to steps S'₃, S'₄ and S'₅ according to figure 2B. This variant is more efficient than the prior art but less efficient than the example of figure 2B.

Other examples of startup sequences according to the prior art, resp. according to the invention, are illustrated on figure 3A, resp. figures 3B and 3C, each including a standstill mode. Each sequence comprises several steps, an example for the duration of each step being indicated on each of figures 3A - 3C.

The sequence of figure 3A, resp. 3B and 3C, is the same as that of figure 2A, resp. 2B and 2C, except that a standstill mode (as explained above) is included after each of steps S₀, S'₀, S"₀, said stand-still mode ending upon receipt of a start order S, resp. S' and S".

In the example of figure 3B, the standstill mode takes place between the end of steps S'₀ (and S'₁) and the beginning of step S'₂. In the example of figure 3C the standstill mode takes place between the end of sub-step S"₁₁ and the beginning of sub-step S"₁₂, shortly followed (for example 5 s or, more generally, between 1 s and 10 s) by the beginning of step S"₂.

More generally, according to one aspect of the invention, the main inlet valve 14 is open, or pressure is balanced on both sides of the main inlet valve 14, before the start order (S' or S"), that means earlier than in a method according to the prior art.

The guide vanes are open during a phase (steps S'₂ and S"₂) which has about the same duration as in the prior art, but which starts earlier than in the prior art.

In the variants described in figures 2B and 3B, the speed ramp up (speed increase of the runner) phase is shortened because there are no head losses associated to the main inlet valve not fully opened. In the variants described in figures 2C and 3C, the opening of the main inlet valve occurs during the beginning of the speed ramp up and some head losses occur, not allowing the best performances.

In a process as disclosed above operation time is saved (with respect to prior art) because the main inlet valve 14 and guide vanes are open earlier , but also because the speed increase of the runner starts earlier.

Figures 4A and 4B are two different views of an example of a water tight distributor which can be implemented in the frame of the present invention, figure 4B being a section along AA' (see figure 4B).

References 20 and 22 on figure 4B designate the axis of rotation of 2 guide vanes. They are positioned on a circle around the runner. Between two such axis, a metallic seal 28 is clamped by two seal clamps 24, 26 (figures 4A, 4B). A compression O-ring seal 30 is located between said metallic seal 28 and the bottom of a groove 32; such a groove is made in an upper and a lower cover 41 in front of the guide vanes in closed position. The seal clamps are maintained by clamp fixations 34, 38 and 36, 40, comprising screws 34, 36 and screw heads 38, 40.

The guide vanes in closed position are located in front of and along the metallic seal 28. The metallic seal has a small shoulder opposed to the O-ring 28, allowing a contact and a compression between the guide vanes in closed position and said metallic seal 28, compressing by mechanical effect the O-ring seal 30 in the groove. The compression ensures the tightness between the cover 41 and the O-ring seal 30, the tightness between O-ring 30 and the metallic seal 28, and the tightness between the metallic seal 28 and the guide vanes.

The present invention proposes a method for starting a hydroelectric unit in a faster way than known prior art methods. It reduces the time to start up said hydroelectric unit.

In maintenance and stop modes, both main inlet valve 14 and distributor 4 are closed.

## Claims

1. Method for starting a hydroelectric turbine (10) provided with a runner (6) mechanically coupled to a shaft line (8), a distributor (4) comprising leak-tight guide vanes to control a flow of water to said runner, a spiral case (12) for supplying water to said runner, said spiral case (12) comprising a duct (13) connected to a main inlet valve (14), the method comprising:
a) a step of balancing pressures on both sides of said main inlet valve (14), and of at least partially opening said main inlet valve (14), while the leak-tight guide vanes of the distributor (4) are closed, water pressurized at an upstream level being present in said spiral case and at said distributor (4);
b) then a step of opening the leak-tight guide vanes of the distributor (4).

2. Method according to claim 1, wherein said step a) comprises fully opening said main inlet valve (14).

3. Method according to claim 1 or 2, wherein said main inlet valve (14) comprises a spherical valve or a butterfly valve.

4. Method according to any of claims 1 to 3, wherein said water present in said spiral case and at said distributor (4) during step a) is pressurized at at least 2 bars, preferably at least 5 bars, preferably at least 10 bars, and more preferably at least 30 bars.

5. Method according to any of claims 1 to 4, wherein said hydroelectric turbine is connected to one, preferably two, reservoirs of water.

6. Method according to claim 1 to 5, wherein said hydroelectric turbine (10) is connected to a grid, the duration between end of step b) and grid synchronization being less than 30 s.

7. Method according to claim 1 to 6, comprising a standstill mode before step b), wherein said runner (2) is mechanically coupled to the rotor of a generator via said shaft line (8).

8. Method according to claim 7, said standstill mode comprising at least one of:
- injecting pressurized oil in at least one bearing (18) of said shaft line (8);
- cooling of at least one bearing of said shaft line (8);
- keeping at least one oil tank at a high pressure level;
- cooling of a generator;
- applying a brake device in order to maintain the shaft line rotation stopped;
- keeping at least one oil tank at a high pressure level, for example between 45 bars and 200 bars, in particular between 50 and 65 bars or between 110 and 170 bars, to enable the operation of said distributor.

9. Method according to claim 1 to 8, wherein the speed of the runner increases during step b) or from the beginning of step b).

10. Method according to claim 1 to 9, wherein the main inlet valve (14) is at least partly opened before receiving an order (S', S") of starting the hydroelectric turbine.

11. Method according to claim 1 to 10, wherein the pressures on both side of the main inlet valve (14) are balanced before receiving an order (S', S") of starting the hydroelectric turbine.

12. A hydroelectric turbine (10) provided with a runner (6) mechanically coupled to a shaft line (8), comprising a distributor (4) comprising leak-tight guide vanes to control a flow of water to said runner, a spiral case (12) for supplying water to said runner, said spiral case comprising a duct (13) connected to a main inlet valve (14), said turbine further comprising a controller (16) to start said hydroelectric turbine so as to implement a method according to any of claims 1 to 11.

13. A hydroelectric turbine (10) according to claim 12, wherein said turbine is of the fixed or variable speed type, or of the Francis or Kaplan or bulb or reversible Francis turbine type.

14. A computer program comprising instructions for implementing a method according to one of claims 1 to 11.
